# EUROPEAN PATENT SPECIFICATION

(11) **EP 0 410 520 B1**
(45) Date of publication and mention of the grant of the patent: **06.09.1995**
(21) Application number: 90201973.6
(22) Date of filing: 20.07.1990
(51) Int. Cl.: A01C 17/00, A01C 15/00

(54) **A machine for spreading material**
Streuer
Epandeur

(30) Priority: 24.07.1989 NL 8901903
(43) Date of publication of application: 30.01.1991
(60) Divisional application: 95200253.3
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 075 313
- EP-A- 0 241 982
- EP-A- 0 287 165
- FR-A- 2 359 452
- FR-A- 2 385 310
- US-A- 4 277 022

## Description

The invention relates to a machine for spreading material, more specifically granular and/or pulverulent material such as artificial fertiliser, which machine comprises a frame, a storage bin for the material to be spread and at least one spreader member, a material guide member being located between the storage bin and the spreading member, the upper edge of the material guide member is contiguous to a closeable discharge aperture in the lower side of the storage bin, the material guide member being coupled with a measuring device for measuring at least part of the material flowing through the guide member to the spreading member arranged below the material guide member.

A machine of this kind is known from EP-A-0287165. In this known device the guide member is hingeably connected to the lower end of the storage bin. The guide member being sidewardly and downwardly extending from the hinge axis and is hanging with its lower end on a weighing box which is situated in a distance sidewardly from the hinge axis. The weighing box measures only a part of the weight of the material in the guide member, which material flows during operation of the machine to the spreading member. The hinge axle supports also a part of the weight of the material moving along the guide member during operation of the machine. This type of weighing the material moving along the guide member may be inaccurate as sometimes a smaller or larger part may be supported by the hinge axle (e.g. when the machine is moving over uneven surfaces). Especially when relative smaller quantities of material per unit of time are moving along the guide member the measuring of these smaller quantities may become inaccurate.

It is an object of the invention to improve the weighing of the material present in the guide member during operation of the machine so as to improve the spreading of the material in the desired quantity per surface unit and/or per unit of time.

According to the invention, this can be achieved in that the material guide member includes a downwardly converging funnel-shaped portion and a feed member, the upper edge of the funnel-shaped portion is movable in an at least approximately vertical direction with respect to the storage bin and the feed member arranged at the lower end of the funnel-shaped portion being contiguous to the spreading member and being provided with a feed aperture, the guide member is bearing on the measuring device at least approximately in a vertical line extending at least approximately through the centre of gravity of the guide member. With this construction all the material present in the guide member during operation of the machine will act on the measuring device. Owing hereto the measuring of the quantity of material being spread per unit of time can be measured more accurately in different circumstances. As the guide member bears on the measuring device in the vertical line having the centre of the gravity of the guide member the movements of the machine as a consequence of travelling over uneven surfaces will not influence the measuring.

The EP-A-0075313 shows a machine for spreading material which has a measuring device measuring the weight of the whole storage bin and its content. The construction of this known machine is relatively complicated whereas the measuring device has to be very strong. This machine has the disadvantage that it will be more difficult to measure accurately small quantitites of material to be spread per unit of surface and/or unit of time.

A favourable embodiment of the machine according to the invention is obtained when the guide member bears on the measuring. device through the intermediary of the spreading member. Hereby also the material present on the spreading member is measured by the measuring device. This will enlarge the accuracy of measuring the quantity of material spread out by the spreading member.

An advantageous embodiment of the machine according to the invention is obtained when the feed member bears on the spreading member supported rotatably about a rotary axis by a gear housing, which gear housing is situated below the spreading member and is mounted on the measuring device, the said axis coincide at least approximately with the vertical line. Herewith the machine may be simple in its construction.

An usefull construction of the machine according to the invention can be obtained when the funnel-shaped portion is mounted to the gear housing by a carrier bracket and when the feed member is movably arranged with its upper end around the lower end of the funnel-shaped member. A simple construction can be obtained hereby when the guide member and the spreading member are together hingeably connected to the frame by a parallelogram construction, so as to be capable of movement in a vertical direction relative to the frame, and when the guide member and the spreading member bears on a weighing device.

According to a further embodiment of the machine according to the invention the storage bin provides two discharge nozzles below each of which is provided a guide member and a spreading member, both the two guiding members and the two spreading members are bearing on a measuring device.

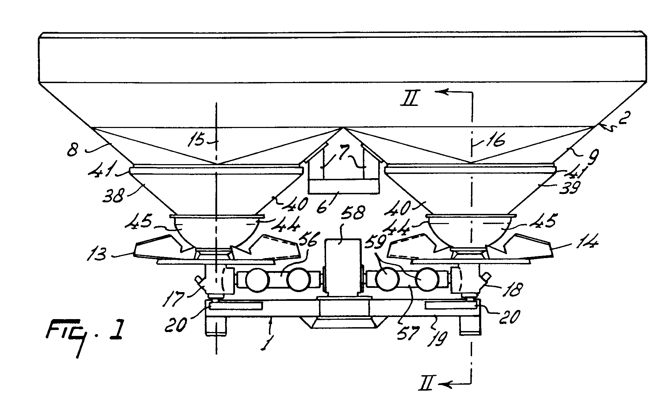

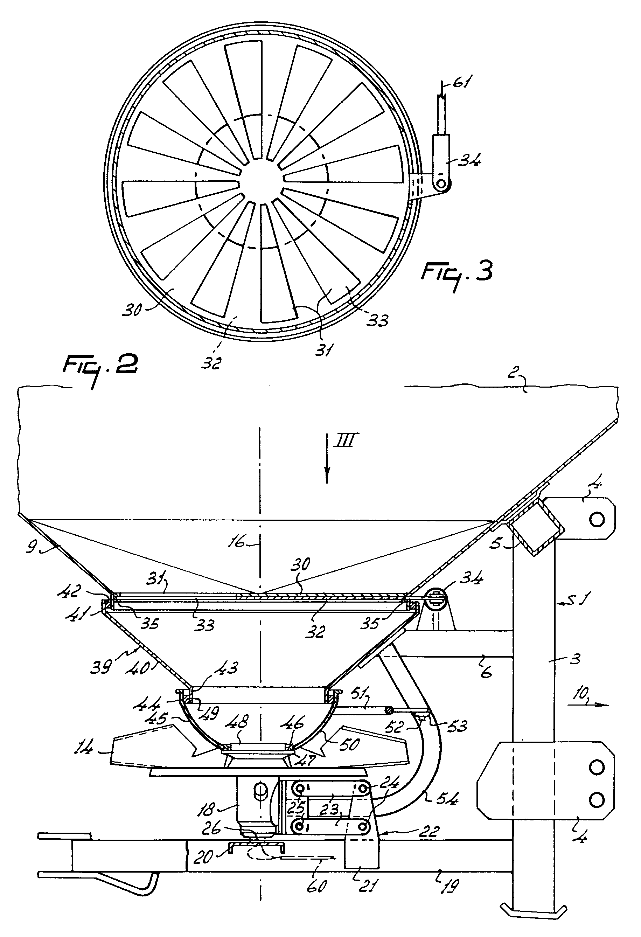

For a better understanding of the present invention and to show how the same may be carried into effect, reference will now be made, by way of example, to some embodiments of the machine shown in the accompanying drawings, in which:
Figure 1 is a rear view of a machine according to the invention;
Figure 2 is, to an enlarged scale, a cross-sectional view taken in the line II - II in Figure 1 of part of the machine;
Figure 3 is a plan view of part of the machine in the direction of the arrow III in Figure 2;
Figure 4 is a rear view of a further embodiment of the machine according to the invention;
Figure 5 is a side view of the machine of Figure 4, seen in the direction of the arrow V in Figure 4;
The embodiment of the machine according to the invention as shown in Figures 1, 2 and 3 comprises a frame 1 having fastened thereto a storage bin 2. The frame 1 includes a vertical frame portion 3 having attached thereto coupling members 4 for coupling the machine to the lifting hitch of a tractor or a such like vehicle. The upper end of the frame portion 3 includes an upper beam 5 having fastened thereto the storage bin 2. In addition, the frame portion 3 is provided with a carrier 6 which, during operation, extends rearwardly relative to the direction of operative travel 10. At the end of the carrier 6 there are mounted upwardly extending supports 7. The supports 7 support the storage bin in its centre and are contiguous to the facing walls of two discharge nozzles 8 and 9 of the storage bin. The discharge nozzles 8, 9 are spaced apart and are arranged transversely to the direction of operative travel 10 of the machine.

Below each of the discharge nozzles 8, 9 there is arranged a spreader member 13 or 14, respectively. The spreader members 13, 14 are supported rotatably about rotary axes 15, 16 by gear housings 17, 18. The gear housings 17, 18 are supported by a horizontal frame portion 19 which extends rearwardly from the frame portion 3. The frame portion 19 includes two (non-shown) frame beams which are arranged in the shape of a V and are intercoupled by a carrier beam 20. In this embodiment, the gear housings 17, 18 bear on the carrier beam 20 of the horizontal frame portion 19.

As is shown for the gear housing 18 in Figure 2, each of the gear housings 17, 18 is connected pivotably by means of a parallelogram structure 22 to a support 21 which is connected rigidly to the frame portion 19. The pivotal parallelogram structure 22 includes two parallel arms 23, which are connected to the support 21 via pivot pins 24 and to the housing 18 via pivot pins 25.

Each of the gear housings 17, 18 bears on the carrier beam 20 via a measuring device 26 which, in this embodiment, is fastened to the carrier beam 20. In this embodiment, the measuring device 26 constitutes a weighing device which includes a piezoelectric element. As is shown in Figure 2 for the discharge nozzle 9, each of the discharge nozzles 8, 9 has a wall, a round wall in this embodiment, which forms a bottom 30 of the storage bin 2. The bottoms 30 are identical to each other and each bottom 30 is provided with discharge apertures 31 which, in this embodiment, are arranged in the form of a star around the centre line thereof, the arrangement being such that they are distributed uniformly around the centre of the round bottom and together cover approximately half the bottom surface area. In this embodiment there are provided twelve apertures 31. Dosing members 32 are mounted against the bottom side of the bottoms 30. The dosing members 32 are indentical and are formed substantially in the same manner as the bottoms 30. The dosing members have feed-through apertures 33, the number and shape of which are equal to those of the discharge apertures 31, the arrangement being such that the feed-through apertures 33 can fully coincide with the apertures 31. The dosing members 32 are connected to adjusting and locking members 34 which bear on the carrier 6. The lower ends of the discharge nozzles 8, 9 are provided with cylindrical supporting edges 35 which project below the dosing members 32.

Between the lower ends of the discharge nozzles 8, 9 and the spreader members 13, 14 positioned therebelow there are arranged intermediate members 38, 39, respectively, which constitute guide members for guiding the material flowing through the discharge apertures 31 to the relevant spreader member. The intermediate members 38, 39 are identical and their construction will be described in further detail with reference to Figure 2 in respect of the intermediate member 39.

The intermediate member 39 comprises a downwardly converging funnel 40 having a cylindrical upper edge 41. The upper edge 41 is contiguous to the lower side of the storage bin 2, which lower side is provided with the discharge apertures 31, and is located around the edge 35. Between the edges 35 and 41 there is aranged a sealing ring 42 which is connected to either thereof and, preferably, is made of elastic material. The lower end of the funnel 40 has a cylindrical rim 43, which is located within a cylindrical rim 44 of a cup-shaped feed member 45. Between the rims 43 and 44 there is arranged a sealing ring 49 which, preferably, is made of a flexible material and is fastened only to either rim 43 or 44. By means of its lower edge 46, the cup-shaped feed member 45 bears on a supporting edge 47 of the spreader member 14. The lower edge 46 is positioned around a centring disc 48 which is connected rigidly to the spreader member 14. The funnel 40 and the cup-shaped feed member 45 are arranged concentrically about a centre line which coincides with the axis of rotation 16 of the spreader member 14. The axis of rotation 16 furthermore constitutes the centre line of the discharge nozzle 9. Similarly, the axis of rotation 15 of the spreader member 13 constitutes the centre line of the discharge nozzle 8, the intermediate member 38 being arranged centrically about the axis of rotation 15. The centring disc 48 is arranged centrically about the axis of rotation 16. The feed member 45 is provided with one or more feed apertures 50, the lower edges of which, in this embodiment, are located near the lower edge 46 of the feed member 45. The cup-shaped feed member 45 includes a locking arm 51 which is fastened thereto, preferably with some degree of movement. The end of the locking arm 51 that is remote from the feed member 45 is provided with a locking pin 52 which fits in an aperture in a lug 53. The lug 53 is connected rigidly to a carrier bracket 54 positioned between the funnel 40 and the gear housing 18, the arrangement being such that the funnel 40 is supported by the gear housing 18.

In a manner not shown in further detail, the spreader members 13, 14 are connected to shafts which are bearing-supported in the gear housings and are coupled by means of transmission members constituted by bevel gearwheels to the respective drive shafts 56 and 57. The drive shafts 56, 57 are coupled to transmission members in a gear box 58 which is connected rigidly to the carrier beam 20. As is apparent from Figure 1, each of the drive shafts 56, 57 is provided with two couplings 59 in such a manner that the gear housings 17, 18 are capable of upward movement relative to the gear box 58. In a manner not shown in further detail, the gear box 58 is provided with transmission members which are coupled to a shaft which projects from the gear box 58 at its leading side and can be coupled by means of an intermediate shaft to the power take-off shaft of a tractor or a similar vehicle carrying the machine.

During use, the machine is carried by a tractor or a suchlike vehicle, the machine being coupled to e.g. the three-point lifting hitch of a tractor by means of the coupling members 4. On coupling of the machine to the tractor, the power take-off shaft of the tractor is coupled via an intermediate shaft to the described coupling shaft which is connected to the transmission members in the gear box 58. The machine is used for spreading material over a surface area, more specifically for spreading granular and/or pulverulent material such as artificial fertilizer, over agricultural fields. For this purpose the machine is moved along by the tractor over the surface area during operation, the machine spreading the material over a strip thereof. During operation, the material to be spread is carried along in the storage bin 2 and from thence is fed to the spreading members 13, 14. In order to be able to spread the material, the spreading members 13, 14 are induced to rotate in the desired direction about the rotary axes 15 and 16. The drive is effected from the tractor, via the intermediate shaft and the transmission members in the gear box 58, by the respective transmission shafts 56, 57 and the transmission members in the gear housings 17, 18. In order to obtain a normal spread of the material, the setting of the machine and the rotation of the spreading members are such that the material is spread equally far to either side of the longitudinal axis of the machine.

The quantity of material spread per unit of time and/or per surface unit of the surface area to be spread can be adjusted by opening the discharge apertures 31 in the bottoms 30 of the discharge nozzles 8, 9 of the storage bin to a greater or lesser extent. This can be done by moving the dosing member 32 about the respective rotary axis 15 or 16 relative to the respective bottom. As a result, the feed-through apertures 33 can coincide with the apertures 31 to a greater or lesser extent. This movement can be set by means of the adjusting member 34, while, in addition, by means thereof the dosing member can be locked in the desired position relative to the relevant bottom. The material flowing through the more or less open discharge apertures from the storage bin to the relevant intermediate member 38, 39, flows via the intermediate member and the feed apertures 50 in the relevant cup-shaped feed member 45 to the relevant spreader member 13, 14. The location of the feed apertures 50 about the relevant rotary axis 15, 16 determines the position where the material is fed to the spreader member, seen relative to the rotary axis and the direction of operative travel 10. This feed position determines the direction in which the material is spread by the relevant spreader member in dependence on the shape of the spreader member and the speed of rotation imparted thereto during operation. If so desired, the position of the feed apertures 50 about the relevant rotary axis 15, 16 can be set by moving the relevant cup-shaped member 45 about the relevant rotary axis by means of the locking arm 51. For this purpose the lug 53 can be provided with a plurality of apertures, into one of which the pin 52 can be inserted at option.

In dependence on the quantity of material to be spread per surface unit and in dependence on the rate of travel of the machine, the quantity of material present in the relevant intermediate member 38, 39 and on the relevant spreader member 13, 14 will be greater or smaller. When e.g. a large quantity of material has to be spread per surface unit, the discharge apertures will be completely or almost completely open. As a result, a comparatively large quantity of material will flow per unit of time through the discharge apertures to the relevant intermediate member 38, 39, which discharge apertures, in this embodiment, are distributed uniformly around the centres of the bottoms 30 and are twelve in number. This material is fed from the intermediate member via the feed apertures 50 to the relevant spreader member 13, 14 and is spread substantially from the circumference thereof. Since the material requires a certain amount of time to move through the intermediate member and over the relevant spreader member, a given quantity of material will always be present in the intermediate member and on the spreader member. The quantity of material present in the intermediate member and on the spreader member will be greater or smaller in dependence on the extent to which the discharge apertures 31 have been opened. In accordance with the invention, the quantity of material, or its weight, contained per unit of time in the intermediate member and on the spreader member is used as an indication to establish whether the desired quantity of material is spread per unit of time in order to achieve a spread of the material in a desired quantity over a surface unit. For this purpose the intermediate member cum relevant spreader member is connected capably of movement in height to the bottom side of the relevant discharge nozzle 8, 9. Since the funnel-shaped portion 40 is connected to the relevant gear housing 17, 18 via the carrier bracket 54 and the cup-shaped feed member 45 is supported by the relevant spreader member 13, 14, the assembly consisting of the intermediate members 38, 39, the spreader members 13, 14 and the relevant gear housing 17, 18 is carried by the weighing device 26.

Each intermediate member cum spreader member and gear housing has a fixed weight, which weight, plus that of the quantity of material present in the intermediate member and on the spreader member, is weighed by the weighing device 26. In other words, the weight bearing on the weighing device consists of a constant portion formed by the intermediate member, the spreader member and the gear housing, and a variable portion formed by the varying quantity of material present in the intermediate member and on the spreader member. Depending on the quantity of material intended to be spread at a given rate of travel in order to obtain the desired quantity of material per surface unit, the quantity of material present in the intermediate member and on the spreader member may vary. At a given rate of operative travel and at a given setting of the discharge apertures 31 in order to achieve the spread of the desired quantity of material per surface unit, however, the quantity of material present in the intermediate member and on the spreader member will always be constant. Thus, an indication as to the spread of the material per unit of time or per surface unit to be spread can be furnished by the weighing device 26. By means of cables 60 the weighing device 26 is connected to a (non-shown) member, e.g. an electronic mechanism, which may be located in the cab of the tractor. Via cables 61 the electronic mechanism or similar other mechanism can be coupled to the adjusting member 34, the arrangement being such that there is an automatic control of the desired quantity of material present in the intermediate member 39 and on the spreader member 14, or of the quantity of material that is spread per unit of time and/or per surface unit. As constant values may be entered into the electronic or other control mechanism the quantity of material intended to be spread per surface unit and the spreading width of the machine. In addition, as variable values may then be entered the indication from the weighing device 26 as to the weight of the quantity of material present in the intermediate member and on the relevant spreader member and the rate of operative travel of the machine. Thus it is possible to achieve that, when the rate of travel is increased, the apertures are opened to a further extent, whereas, when the rate of travel is decreased, the apertures are automatically closed to a greater or lesser extent in order to obtain a spread of the material in the desired quantity over a surface unit.

According to the inventive idea, in order to be able to obtain the desired indication from the measuring device 26, the relevant intermediate member, the spreader member and the gear housing bear on the weighing device. Due to the relevant parallelogram structures 22 between the gear housings 17, 18 and the frame as well as due to the couplings 59 in the drive shafts 56, 57, the assembly supported by the weighing device 26 bears substantially freely thereon. In this embodiment, the weighing operation is influenced advantageously in that the weighing device is located in the middle below the centre of gravity of the machine portion to be weighed together with the material present therein and thereon. In a vertical position of the machine, the measuring device 26 is located substantially on the vertical line including the centre of gravity of the machine portion to be weighed and that of the material present therein and thereon, during operation.

The weight indications obtained from the weighing devices 26 below the respective gear housings 17, 18 may be kept apart and may be displayed on a screen or other display element to the driver of the tractor or of the machine, so that it will be possible to establish whether each of the spreader members performs its required function. Thereafter, the values supplied by the weighing devices 26 may be added together in order to be able to determine and display to the driver whether the desired quantity of material is spread per surface unit. The separate display of the indications supplied by the measuring devices 26 can provide an indication as to the distribution of the material over the strip onto which the material is spread by the spreader members 13, 14, during travel of the machine. The inventive idea can be applied both in machines wherein each of the two spreader members 13, 14 spreads the material substantially to one side relative to the longitudinal axis of the machine, and in machines of such a construction that the spreader members 13, 14 both spread the material over equal distances on either side relative to the longitudinal axis of the machine, the arrangement being such that the spread patterns formed by the two spreader members overlap substantially completely.

According to the invention, it is alternatively possible to combine the two spreader members 13, 14, the relevant intermediate members 38, 39 and the gear housings 17, 18 to form an integral whole. This integral whole can be capable of upward movement as one assembly relative to the storage bin and the frame and can be supported by e.g. one single weighing device. In such an embodiment, the gear housing 58 may be implemented from intermediate sections comprising the drive shafts 56, 57 as one rigid whole with the gear housings 17, 18. Then, it may be possible to provide one weighing device below the gear box 58, so that via this single weighing device an indication will be obtained as to the quantity of material present in the two intermediate members 38, 39 and on the two spreader members 13, 14, all this in accordance with the features described for the embodiment shown.

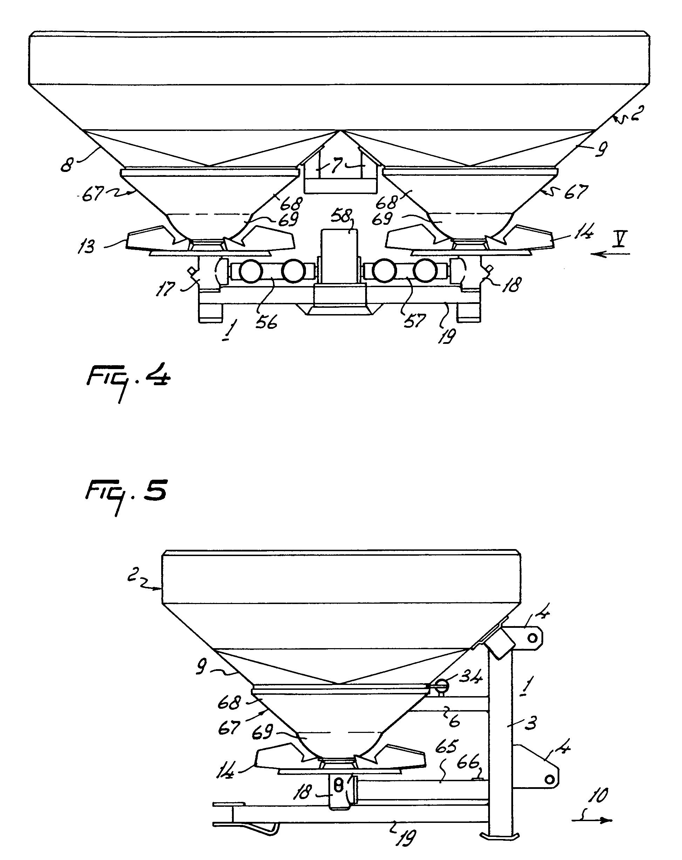

Figures 4 and 5 show an embodiment which to a large extent corresponds to that shown in Figures 1 to 3. In Figures 4 and 5, the component parts which correspond to those occurring in Figures 1 to 3 have been denoted by the same reference numerals. The embodiment of Figures 4 and 5 has a structure which, compared with Figures 1 to 3, only differs as regards the measuring device which is in the form of a weighing device and the intermediate members between the discharge nozzles 8, 9 and as regards the spreader members 13, 14. In the embodiment shown in Figures 4 and 5, the intermediate member cum spreader members and the gear housings on which the spreader members are provided, are not supported by a weighing device on which the bottom side of the gear housing bears, but by a weighing arm via which the gear housing is connected to the frame 1. In this embodiment, the sag of the weighing arm 65 serves as an indication as to the measurement of the weight of the intermediate member, the spreader member, the gear housing and the material present therein and thereon, respectively. To this end, the weighing arm 65 is provided with a weighing device which includes a strain gauge 66 arranged thereon. The distortion of the weighing arm is measured by the strain gauge and is used as a measure for weighing the relevant machine parts and the material to be spread and present therein and thereon. In this embodiment, between the discharge nozzles 8, 9 and the respective spreader members 13, 14 there are arranged intermediate members 67 which, as regards shape, are very closely similar to the respective intermediate members 38, 39. Consequently, each of the intermediate members 67 has a funnel-shaped portion 68 and a cup-shaped portion 69 arranged therebelow. In this embodiment, however, the funnel-shaped portion 68 and the cup-shaped portion 69, which is substantially in the form of a half-sphere, are formed as an integral whole. Thus, the funnel-shaped portion cum cup-shaped portion bear on a supporting edge 47 of the relevant spreader member as an integral whole. Like the funnel-shaped portion 40, the upper side of the funnel-shaped portion 68 of the intermediate member 67 has a raised cylindrical edge 41 which fits around a supporting edge 35 of the relevant discharge nozzle, a sealing material, e.g. the sealing ring 42, being present therebetween. Since the cup-shaped portion 69 bears on a suporting edge 47 which co-rotates with the spreader member, the embodiment shown in Figures 4 and 5 is provided with (non-shown) means, such as the arm 51 in Figure 2, which prevent the intermediate member 67 from co-rotating with the relevant spreader members about their respective rotary axes 15, 16.

Like the machine in the previous embodiment, the machine shown in Figures 4 and 5 is used in particular for spreading material over agricultural fields. During travel of the machine over a surface area to be spread, the material is spread in such a way that it is strewn equally far to either side of the longitudinal axis of the machine. The strain gauge 66 measures the extent to which the weighing arm 65 sags under the weight of the various component parts carried thereby and the material present in and/or on those component parts, such as the intermediate member 67 and the respective spreader members 13, 14. The extent of sag furnishes an indication as to the weight of the intermediate member 67, the relevant spreader member and the material therein and thereon. This weight measurement serves as an indication whether the desired quantity of material is spread per unit of time and/or per surface unit. Like in the previous embodiment, the result of this measurement can be used to control the size of passage of the discharge apertures 31 in the bottom side of the discharge nozzles 8, 9 in such a manner that a constant quantity of material is spread per surface unit.

## Claims

1. A machine for spreading material, more specifically granular and/or pulverulent material such as artificial fertilizer, which machine comprises a frame (1), a storage bin (2) for the material to be spread and at least one spreading member (13, 14), a material guide member (38, 39) being located between the storage bin (2) and the spreading member (13, 14), the upper edge of the material guide member is contiguous to a closeable discharge aperture in the lower side of the storage bin, the material guide member being coupled with a measuring device (26, 65) for measuring at least part of the material flowing through the guide member (38, 39) to the spreading member (13, 14) arranged below the material guide member (38, 39), characterized in that the material guide member includes a downwardly converging funnel-shaped portion (40) and a feed member (45), the upper edge (41) of the funnel-shaped portion (40) being movable in at least an approximately vertical direction with respect to the storage bin and the feed member (45) arranged at the lower end of the funnel-shaped portion being contiguous to the spreading member and being provided with a feed aperture (50), and in that the guide member bears on the measuring device (26, 65) at least approximately in a vertical line (16) extending at least approximately through the centre of gravity of the guide member (38, 39).

2. A machine as claimed in claim 1, characterized in that the guide member bears on the measuring device through the intermediary of the spreading member.

3. A machine as claimed in claim 2, characterized in that the feed member (45) bears on the spreading member (14) supported rotatably about a rotary axis (15, 16) by a gear housing (18), which gear housing is situated below the spreading member and is mounted on the measuring device, the said axis coincide at least approximately with the vertical line.

4. A machine as claimed in claim 3, characterized in that the funnel-shaped portion (40) is mounted to the gear housing (18) by a carrier bracket and that the feed member (45) is movably arranged with its upper end (44) around the lower end (43) of the funnel-shaped member (40).

5. A machine as claimed in any one of the preceding claims, characterized in that the guide member (38, 39) and the spreading member (13, 14) are together hingeably connected to the frame by a parallelogram construction, so as to be capable of movement in a vertical direction relative to the frame, and that the guide member and the spreading member bears on a weighing device (26).

6. A machine as claimed in claim 3, characterized in that the gear housing (17, 18) is mounted to a supporting arm (65) of the measuring device including a strain gauge (66) mounted on the supporting arm (65).

7. A machine as claimed in any one of the preceding claims, characterized in that the storage bin (2) provides two discharge nozzles (8, 9) below each of which is provided a guide member (38, 39, 67) and a spreading member (13, 14), both the two guiding members (38, 39 and 67) and the two spreading members (13, 14) are bearing on a measuring device (26, 65).

8. A machine as claimed in any one of the preceding claims, characterized in that the measuring device (26, 65) is coupled to an electronic mechanism, which electronic mechanism is such that as fixed values can be keyed thereinto the spreading width and the desired quantity of material to be spread per surface unit, which values can be compared in the electronic mechanism with the variable values of the measuring device (26, 65, 101) and the rate of operative travel of the machine to be keyed thereinto, the arrangement being such that the desired quantity of material per surface unit is spread by controlling the adjusting member (34) for the dosing member (32) by means of the variable values fed into the electronic mechanism, which dosing member controls the quantity of material supplied from the storage bin to the spreading member.

## Patentansprüche

1. Gerät zum Streuen von Gut, insbesondere von körnigem und/oder pulverigem Gut wie Kunstdünger, mit einem Rahmen (1), einem Vorratsbehälter (2) für das Streugut und mindestens einem Streuglied (13, 14), wobei zwischen dem Vorratsbehälter (2) und dem Streuglied (13, 14) ein Gutführungsglied (38, 39) angeordnet ist, dessen oberer Rand an eine verschließbare Austrittsöffnung angrenzt, die in der Unterseite des Vorratsbehälters ausgebildet ist, und das mit einer Meßvorrichtung (26, 65) verbunden ist, von der zumindest ein Teil des Gutes gemessen wird, das durch das Führungsglied (38, 39) hindurch zu dem unterhalb des Gutführungsgliedes (38, 39) angeordneten Streuglied (13, 14) strömt,
dadurch gekennzeichnet, daß das Gutführungsglied einen nach unten konvergierenden trichterförmigen Teil (40) und ein Austragglied (45) aufweist, wobei der obere Rand (41) des trichterförmigen Teiles (40) in mindestens annähernd vertikaler Richtung in bezug auf den Vorratsbehälter zu bewegen ist und das an dem unteren Ende des trichterförmigen Teiles angeordnete Austragglied (45) an das Streuglied angrenzt und eine Durchtrittsöffnung (50) aufweist, und daß das Führungsglied (38, 39) auf der Meßvorrichtung (26, 65) mindestens annähernd entlang einer vertikalen Geraden (16) aufruht, die mindestens annähernd durch seinen Schwerpunkt verläuft.

2. Gerät nach Anspruch 1,
dadurch gekennzeichnet, daß das Führungsglied unter Zwischenlage des Streugliedes auf der Meßvorrichtung aufruht.

3. Gerät nach Anspruch 2,
dadurch gekennzeichnet, daß das Austragglied (45) auf dem um eine Drehachse (15, 16) drehbaren Streuglied (14) aufruht, das mittels eines Getriebes (18) drehbar abgestützt ist, das unterhalb des Streugliedes an der Meßvorrichtung angeordnet ist, wobei die Drehachse mindestens annähernd mit der vertikalen Geraden zusammenfällt.

4. Gerät nach Anspruch 3,
dadurch gekennzeichnet, daß der trichterförmige Teil (40) mittels eines Tragbügels an dem Getriebegehäuse (18) angeordnet ist, und daß das Austragglied (45) mit seinem oberen Ende (44) um das untere Ende (43) des trichterförmigen Teiles (40) drehbar ist.

5. Gerät nach einem der vorhergehenden Ansprüche,
dadurch gekennzeichnet, daß das Führungsglied (38, 39) zusammen mit dem Streuglied (13, 14) durch eine Parallelogramm-Konstruktion mit dem Rahmen schwenkbar verbunden ist, derart, daß es relativ zu dem Rahmen in vertikaler Richtung zu bewegen ist, und daß das Führungsglied und das Streuglied auf einer Wägevorrichtung (26) aufruhen.

6. Gerät nach Anspruch 3,
dadurch gekennzeichnet, daß das Getriebegehäuse (17, 18) an einem Tragarm (65) der Meßvorrichtung angebracht ist, zu der ein Dehnungsmesser (66) gehört, der auf dem Tragarm (65) angeordnet ist.

7. Gerät nach einem der vorhergehenden Ansprüche,
dadurch gekennzeichnet, daß der Vorratsbehälter (2) zwei Auslaßtrichter (8, 9) aufweist, unter denen jeweils ein Führungsglied (38, 39, 67) und ein Streuglied (13, 14) angeordnet sind, wobei die beiden Führungsglieder (38, 39 und 67) und die beiden Streuglieder (13, 14) auf einer Meßvorrichtung (26, 65) aufruhen.

8. Gerät nach einem der vorhergehenden Ansprüche,
dadurch gekennzeichnet, daß die Meßvorrichtung (26, 65) mit einer elektronischen Einrichtung verbunden ist, die derart ausgebildet ist, daß die Streubreite und die gewünschte, pro Flächeneinheit auszustreuende Gutmenge als feste Werte einzugeben sind und in der elektronischen Einrichtung mit den einzugebenden veränderlichen Werten der Meßvorrichtung (26, 65) und der Geschwindigkeit zu vergleichen sind, mit der das Gerät befördert wird, wobei die Anordnung so getroffen ist, daß die gewünschte Gutmenge pro Flächeneinheit dadurch ausgestreut wird, daß mittels der in die elektronische Einrichtung eingegebenen veränderlichen Werte das Stellglied (34) für den Dosierer (32) gesteuert wird, der die dem Streuglied aus dem Vorratsbehälter zugeführte Gutmenge steuert.

## Revendications

1. Machine pour épandre de la matière, plus spécifiquement de la matière granulaire et/ou pulvérulente telle que de l'engrais artificiel, laquelle machine comprend un châssis (1), une trémie (2) pour la matière à épandre et au moins un organe d'épandage (13, 14), un organe de guidage de la matière (38, 39) étant situé entre la trémie (2) et l'organe d'épandage (13, 14), le bord supérieur de l'organe de guidage de la matière étant contigu à une ouverture de décharge pouvant être obturée, dans le côté inférieur de la trémie, l'organe de guidage de la matière étant couplé à un dispositif de mesure (26, 65) pour mesurer au moins une partie de la matière s'écoulant à travers l'organe de guidage (38, 39) jusqu'à l'organe d'épandage (13, 14) disposé en dessous de l'organe de guidage de la matière (38, 39),
**caractérisée** en ce que l'organe de guidage de la matière comprend une partie (40) en forme d'entonnoir, convergente vers le bas, et un organe d'alimentation (45), le bord supérieur (41) de la partie (40) en forme d'entonnoir étant mobile dans une direction au moins approximativement verticale par rapport à la trémie, et l'organe d'alimentation (45) disposé à l'extrémité inférieure de la partie en forme d'entonnoir étant contigu à l'organe d'épandage et étant muni d'une ouverture d'alimentation (50), et en ce que l'organe de guidage porte sur le dispositif de mesure (26, 65) au moins approximativement selon une ligne verticale (16) passant au moins approximativement par le centre de gravité de l'organe de guidage (38, 39).

2. Machine selon la revendication 1, caractérisée en ce que l'organe de guidage porte sur le dispositif de mesure par l'intermédiaire de l'organe d'épandage.

3. Machine selon la revendication 2, caractérisée en ce que l'organe d'alimentation (45) porte sur l'organe d'épandage (14) supporté de manière rotative autour d'un axe de rotation (15, 16) par un boîtier d'engrenages (18), lequel boîtier d'engrenages est situé sous l'organe d'épandage et est monté sur le dispositif de mesure, ledit axe coîncidant au moins approximativement avec la ligne verticale.

4. Machine selon la revendication 3, caractérisée en ce que la partie (40) en forme d'entonnoir est montée sur le boîtier d'engrenages (18) au moyen d'un bras porteur coudé, et en ce que l'organe d'alimentation (45) est disposé de manière mobile avec son extrémité supérieure (40) autour de l'extrémité inférieure (43) de l'organe (40) en forme d'entonnoir.

5. Machine selon l'une quelconque des revendications précédentes, caractérisée en ce que l'organe de guidage (38, 39) et l'organe d'épandage (13, 14) sont conjointement reliés au châssis de manière articulée par une construction en parallélogramme, de manière à être capables de se mouvoir en sens vertical par rapport au châssis, et en ce que l'organe de guidage et l'organe d'épandage portent sur un dispositif de pesage (26).

6. Machine selon la revendication 3, caractérisée en ce que le boîtier d'engrenages (17, 18) est monté sur un bras de support (65) du dispositif de mesure comportant une jauge extensiométrique (66) montée sur le bras de support (65).

7. Machine selon l'une quelconque des revendications précédentes, caractérisée en ce que la trémie (2) présente deux buses de décharge (8, 9) sous chacune desquelles est prévu un organe de guidage (38, 39, 67) et un organe d'épandage (13, 14), les deux organes de guidage (38, 39 et 67) portant, de même que les deux organes d'épandage (13, 14), sur un dispositif de mesure (26, 65).

8. Machine selon l'une quelconque des revendications précédentes, caractérisée en ce que le dispositif de mesure (26, 65) est couplé à un mécanisme électronique, lequel mécanisme électronique est tel qu'on puisse y introduire au moyen d'un clavier, en tant que valeurs fixées, la largeur d'épandage et la quantité de matière qu'on désire épandre par unité de surface, lesquelles valeurs peuvent être comparées dans le mécanisme électronique aux valeurs variables du dispositif de mesure (26, 65) et avec la vitesse de circulation de la machine en travail, introduite au moyen d'un clavier dans ledit mécanisme électronique, l'agencement étant tel que la quantité voulue de matière par unité de surface est épandue en commandant l'organe de réglage (34) de l'organe de pesage (32) au moyen des valeurs variables introduites dans le mécanisme électronique, lequel organe de dosage commande la quantité de matière fournie à l'organe d'épandage à partir de la trémie.
